## Europäisches Patentamt

## European Patent Office

## Office européen des brevets

(11) Publication number: **0 116 096**
**B1**

(12) **EUROPEAN PATENT SPECIFICATION**

(45) Date of publication of patent specification: **04.11.87**

(21) Application number: **82110579.8**

(22) Date of filing: **16.11.82**

(51) Int. Cl.⁴: **B 62 K 15/00**

(54) **Foldable bicycle frame.**

(43) Date of publication of application:
**22.08.84 Bulletin 84/34**

(45) Publication of the grant of the patent:
**04.11.87 Bulletin 87/45**

(84) Designated Contracting States:
**AT BE CH DE FR GB IT LI LU NL SE**

(56) References cited:
**FR-A-2 063 308**
**GB-A- 108 208**
**GB-A- 136 700**
**GB-A-1 427 477**
**GB-A-2 021 055**
**NL-A- 289 292**
**US-A-4 132 428**

(73) Proprietor: **BRIDGESTONE CYCLE CO., LTD.**
**No. 5-14, 3-chome, Nihonbashi**
**Chuo-Ku Tokyo (JP)**

(72) Inventor: **Ishibashi, Hideyuki**
**4-10-2 Asamadai Ageo-City**
**Saitama-Prefecture (JP)**
Inventor: **Takamiya, Kikuzo**
**3-30 Azuma Kitamoto City**
**Saitama-Prefecture (JP)**

(74) Representative: **Liedl, Gerhard**
**Steinsdorfstrasse 21 - 22**
**D-8000 München 22 (DE)**

Courier Press, Leamington Spa, England.

EP 0 116 096 B1

## Description

The present invention relates to a foldable bicycle frame, including a lower frame provided at its intermediate portion with a hanger bracket having a hanger portion, a front frame having a head tube and being rotatably supported by a shaft attached to the front end of said lower frame, said lower frame having claws at the rear end supporting a rear wheel axle, a seat tube rotatably supported by a shaft attached to said hanger bracket, a front support stay rotatably supported between a first shaft and a second shaft that is attached to said front frame, a seat stay separated into an upper seat stay and a lower seat stay so as to be adapted to be bent at its mid portion, each of said seat stays being composed of a pair of members, said upper seat stay being pivotally secured at its outer end to a portion of said seat tube near the upper end of the latter, while said lower seat stay is pivotally secured at its lower end to said claws of said lower frame, locking means interconnecting the inner ends of said upper seat stay and said lower seat stay.

A bicycle is best adapted for storage in a restricted space if it can be disassembled almost completely into small components capable of being stowed away conveniently. However, the convenience of easy storage is outweighed by the amount of time and effort required for disassembly or reassembly of the bicycle.

Folding bicycles that are adapted to have one or more of their dimensions reduced by relatively simple operations of folding or dismantling represent a compromise solution to the problem of storage or transportation. It is known to reduce the width of a bicycle by designing protruding components such as handlebars or pedals in such manner that they may be folded inwards. Although it is possible to reduce the length of a bicycle by removing the wheels, this operation is troublesome, so that folding bicycles are generally fitted with small wheels that may be left in mounted condition during storage. Effort has been expended on producing bicycle frames that can be folded in various ways in order to achieve a reduction of the length and/or height of the bicycle.

The merits of various known folding bicycles depend upon the smallness of the size to which they can be folded, their structural stability, the simplicity of design, the ease with which they may be folded and the extent to which any special tools may be required in securing the frame in its unfolded condition. However, another important factor is the shape of the space in which a bicycle is to be stored. A bicycle that may be folded to half-length to fit into the boot of a car may not be suitable for storage in a space hardly wider than that of the bicycle in its unfolded state.

The document GB—A—108 208 describes a bicycle frame adapted to be folded to half-length about a substantially vertical axis by means of a vertical juncture tube of special design, provided as an additional structural member between front and back portions of the frame. Folding of the frame requires the releasing of screw bolts provided as locking members. The folding operation does not result in a reduction of the height of the frame.

A bicycle frame to be folded in several separate operations is described in the document US—A—4 132 428. A substantially horizontal frame is provided at a low height. The front frame is hinged to the front of a case surrounding the pedal-crank bearings and can be folded backwards to bring the front wheels adjacent to the rear wheel. A reduction of height is made possible by vertical telescopic twin steering columns and a vertical seat post hinged at the top of the pedal-crank case and adapted to be swivelled backwards and downwards following a swivelling downwards of a bracket supporting the top portion of the seat post and pivotally joined to the end of the rear wheel fork.

The document NL—A—289 292 describes a small-wheeled bicycle wherein the length may be reduced by swivelling the rear wheel fork downwards and forwards around the pedal-crank axis to position the rear wheel close to the front wheel, no alteration to the height of the bicycle being made.

A bicycle allowing a reduction of the height is described in the document GB—A—136 700. The frame is very low and fitted with a tall steering column and a tall seat post. The steering tube is rotatably supported in a steering tube connected by means of a hinge to the front of the frame. To fold the bicycle, a catch of the hinge is released, whereupon the steering column is swivelled backwards to extend beyond the rear wheel. The seat post is removed and clipped to the steering column that is rotated through 180° in order to lower the position of the front wheel.

A bicycle requiring no fastenings to be released before folding is described in the document GB—A—2 021 055. The frame includes an apex bracket located below the saddle, struts joining the apex bracket to the steering tube, struts joining the apex tube to the rear wheel fork, the struts having swivel joints at each end. The frame further includes a tie member joining the bearing unit of the pedal crank to the steering tube and tie members joined to the bearing tube and acting as back wheel forks, all tie members having swivel joints at each end. The saddle post is supported on the bearing unit and is slidably passed through the apex bracket. To fold the bicycle, the saddle post is pulled upwards through the apex bracket, bringing the bearing unit close to the apex bracket. This causes the struts and tie members to swivel so that the frame collapses inwardly and the wheels are brought close together. The protruding saddle post may then be folded to bring the saddle end thereof close to the wheels.

A bicycle frame of the kind mentioned initially is described in the document GB—A—1 427 477. This bicycle also has a low frame divided into a front frame part and a rear frame part which are hinged together so that the bicycle can be folded about a vertical axis. The front fork and steering assembly is hinged to the front frame part and supported by a front stay that is pivotally connected to an upper portion of the steering assembly and to the front frame part and consists of two stay parts hinged together at the centre portion of the front stay, so that the front fork and steering assembly can be folded downwards to lie above the front frame part. A saddle supporting assembly is hinged to the rear frame part and supported by a rear stay or seat stay consisting of two parts hinged together at the centre portion of the rear stay, so that the saddle supporting assembly can be folded back to lie above the rear frame part, the rear stay upper part being folded backwards to lie above the rear stay lower part. Locking means are provided for each of the hinge connections. Thus, the height and the length of this bicycle may be reduced, although a number of separate operations are required.

It is the object of the present invention to provide a folding bicycle frame having the structural features initially mentioned and being of rigid construction and adapted to be easily and promptly folded to reduce the height thereof or unfolded by a simple and single action.

This object is achieved in that the front frame is formed integrally with the head tube, the first shaft is attached to the seat tube, the seat stay is adapted to be bent upwardly at its mid-portion, and the locking means are a locking plate that interconnects the inner ends of the upper seat stay and the lower seat stay in such manner that the inner end of the lower seat stay is directly fixed to the locking plate, while the inner end of the upper seat stay is secured rotatably and slidably by means of a connecting shaft inserted into the locking plate, a compression spring acting on the connecting shaft so as to spread the upper seat stay outwardly, the locking plate being provided at both of its sides with clamping portions fittingly holding the connecting ends of the upper seat stay.

A stopper is provided on the locking plate to prevent an excessive sliding of one of the members of the upper seat stay when the seat stay is pressed by a force exceeding the force of the compression spring.

The foldable bicycle frame of the present invention is capable of being assembled instantaneously to be ready for use and folded easily and simply to facilitate storage when the bicycle is not being used.

As the front frame is formed integrally with the head tube, the front support stay need not connect the steering assembly with the first frame part. The first shaft that supports the frame support stay is attached to the seat tube, so that the head pipe and the front frame are swivelled together with the seat tube when the bicycle is being folded or unfolded.

All of the constituent parts of the frame are formed of metallic materials having high mechanical strength and are therefore of high reliability and can be folded and assembled easily and instantaneously without requiring any specific tools.

The invention is described in detail below with reference to the drawings in which

Fig. 1 is a side elevational view of an embodiment of the invention;

Fig. 2 shows the embodiment of Fig. 1 in the state of being folded;

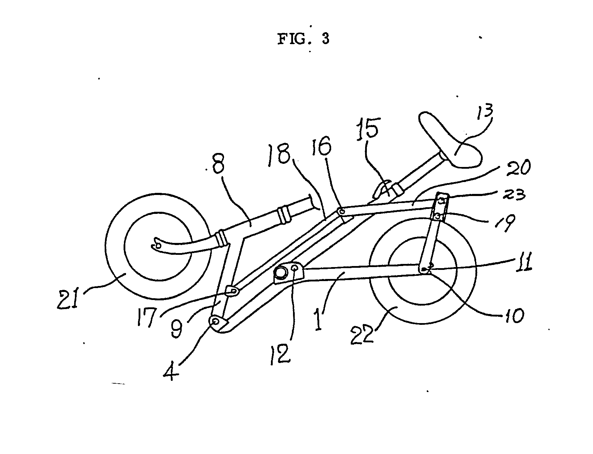

Fig. 3 shows the embodiment of Fig. 1 in folded condition;

Fig. 4 is a top view showing an upper seat stay being disengaged from the clamping portions of a locking plate by the gripping action of a hand;

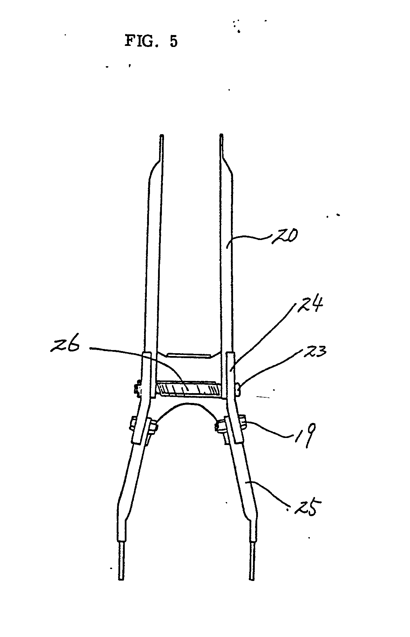

Fig. 5 is a bottom view of the seat stay and the locking plate;

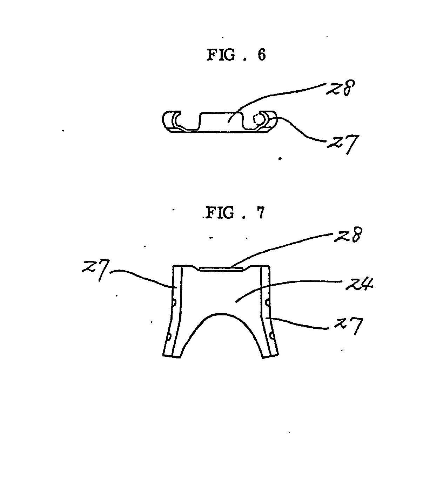

Fig. 6 is a detailed view of the locking plate; and

Fig. 7 is another detailed view of the locking plate.

A hanger bracket 3 having a hanger portion 2 is provided on the mid portion of a lower frame 1. A front frame 9 formed integrally with a head pipe 8 is rotatably supported by a shaft 4 attached to the front end of the frame 1. Claws 10 provided at the rear end of the lower frame 1 support a rear wheel axle 11. A shaft 12 attached to the hanger bracket 3 rotatably supports a seat tube 15. A front support stay 18 is rotatably supported between a shaft 16 attached to the seat tube 15 and a shaft 17 attached to the front frame 9. A seat stay is divided into an upper seat stay 20 and a lower seat stay 25 so as to be able to be bent and flexed at its mid portion. Each of the upper and lower seat stays 20 and 25 is constituted by a pair of members. The outer end of the upper seat stay 20 is pivotally secured to a portion of the seat tube 15 near the upper end of the latter, while the lower seat stay 25 is pivotally secured to the claws 10 provided at the rear end of the lower frame 1. The inner ends of the upper seat stay 20 and the lower seat stay 25 are connected to each other by means of a locking plate 24. More specifically, the inner end of the lower seat stay 25 is fixed to the locking plate 24, while the inner end of the upper seat stay 20 is rotatably and slidably secured by means of a connecting shaft 23 inserted into the locking plate 24. A compression spring 26 on the connecting shaft 23 acts so as to spread the upper seat stay 20 outwardly. The connecting ends of the upper seat stay 20 are fittingly supported by clamping portions 27 provided at both sides of the locking plate 24. The locking plate 24 is provided with a stopper 28 which prevents an excessive sliding movement of only one of the members of the upper seat stay 20 when said members are pressed toward each other overcoming the force of said compression spring 26.

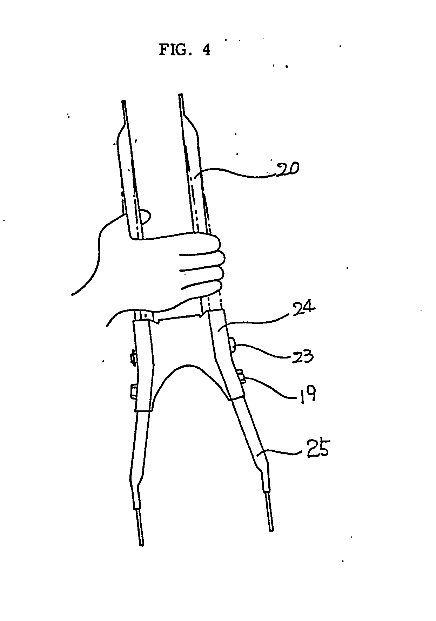

The folding and assembling of this foldable bicycle frame are made in the following manner. Both members of the upper seat stay 20 fitting in the clamping portions 27 of the locking plate 24 by the action of the compression spring 26 and opposing each other are gripped by one hand as shown in Fig. 4, so that both members of the upper seat stay 20 are slid inwardly, overcoming the force of the compression spring 26, into contact with the stopper 28 of the locking plate 24. The connecting ends of the upper seat stay 20 then come off the clamping portions 27 of the locking plate 24, so that the upper seat stay 20 is able to rotate around the connecting shaft 23.

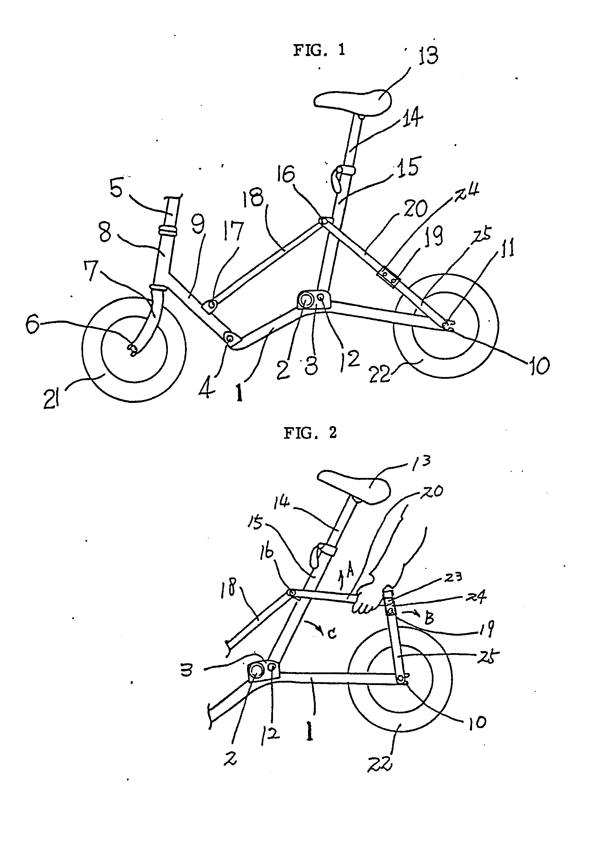

The outer end of the upper seat stay 20 is pivotally secured to the portion of the seat tube 15 near the upper end of the latter, while the lower end of the seat tube 15 is pivotally secured to the hanger bracket 3. The lower seat stay 25 is also pivotally secured to the claws 10 of the lower frame 1. Thus, the lower frame 1, front stay 18, upper seat stay 20 and the lower seat stay 25 in combination constitute a quadrilateral link. As the upper seat stay 20 is rotated in the direction of the arrow A in Fig. 2, the lower seat stay 25 and the seat tube 15 are rotated in the directions of the arrows B and C, respectively, so that the frame is folded in such a manner that the seat tube 15 is inclined rearwardly until it comes into contact with the rear wheel axle 22.

To reassemble the frame from the folded state, the upper seat stay 20, lower seat stay 25 or the seat tube 15 is rotated in the direction opposite to the arrow A, B or C, respectively, in Fig. 2, until the upper and lower seat stays 20 and 25 form a substantially straight line. Since the connecting ends of the upper seat stay 20 are spread outwardly by the force of the compression spring 26, the connecting ends are put into engagement with the clamping portions 27 of the locking plate 24, thus completing the assembling.

The folding and assembling can be made by a simple and single action of lifting or depressing the upper seat stay 20.

In addition, any excessive bending at the juncture between the upper seat stay 20 and the seat tube 15 is effectively prevented by the action of the stopper 28 to ensure a stable folding and assembling operation and a high durability of the foldable bicycle frame.

**Claims**

1. A foldable bicycle frame, including a lower frame (1) provided at its intermediate portion with a hanger bracket (3) having a hanger portion (2), a front frame (9) having a head tube (8) and being rotatably supported by a shaft (4) attached to the front end of said lower frame (1), said lower frame (1) having claws (10) at the rear end supporting a rear wheel axle (11), a seat tube (15) rotatably supported by a shaft (12) attached to said hanger bracket (3), a front support stay (18) rotatably supported between a first shaft (16) and a second shaft (17) which is attached to said front frame (9), a seat stay separated into an upper seat stay (20) and a lower seat stay (25) so as to be adapted to be bent at its mid portion, each of said seat stays (20, 25) being composed of a pair of members, said upper seat stay (20) being pivotally secured at its outer end to a portion of said seat tube (15) near the upper end of the latter, while said lower seat stay (25) is pivotally secured at its lower end to said claws (10) of said lower frame (1), locking means interconnecting the inner ends of said upper seat stay (20) and said lower seat stay (25), characterized in that said front frame (9) is formed integrally with said head tube (8), said first shaft (16) is attached to said seat tube (15), said seat stay is adapted to be bent upwardly at its mid-portion, and said locking means are a locking plate (24) which interconnects the inner ends of said upper seat stay (20) and said lower seat stay (25) in such manner that the inner end of said lower seat stay (25) is directly fixed to said locking plate (24), while the inner end of said upper seat stay (20) is secured rotatably and slidably by means of a connecting shaft (23) inserted into said locking plate (24), a compression spring (26) acting on said connecting shaft (23) so as to spread said upper seat stay (20) outwardly, said locking plate (24) being provided at both of its sides with clamping portions (27) fittingly holding the connecting ends of said upper seat stay (20).

2. A foldable bicycle frame according to claim 1, characterized in that a stopper (28) is provided on said locking plate (24) to prevent an excessive sliding of one of the members of said upper seat stay (20) when said seat stay is pressed by a force exceeding the force of said compression spring (26).

**Patentansprüche**

1. Faltbarer Fahrradrahmen mit einem unteren Rahmen (1), der an seinem mittleren Teil mit einem einen Aufhängeteil aufweisenden Hängebock (3) versehen ist, einem vorderen Rahmen (9), der ein Kopfrohr (8) aufweist und an einer am vorderen Ende des unteren Rahmens (1) befestigten Achse (4) drehbar gelagert ist, wobei der untere Rahmen (1) am hinteren Ende Klauen (10) aufweist, die eine Hinterradachse (11) tragen, einem Sitzrohr (15), das an einer am Hängebock (3) befestigten Achse (12) drehbar gelagert ist, einer vordere Stützstrebe (18), die zwischen einer ersten Achse (16) und einer am vorderen Rahmen (9) befestigten zweiten Achse (17) drehbar gelagert ist, einer Sitzstrebe, die in eine obere Sitzstrebe (20) und eine untere Sitzstrebe (25) derart aufgeteilt ist, daß sie an ihrem mittleren Teil abknickbar ist, wobei jede der Sitzstreben (20, 25) aus einem Paar Gliedern zusammen gesetzt ist und die obere Sitzstrebe (20) an ihrem äußeren Ende an einem Teil des Sitzrohres (15) in der Nähe seines oberen Endes befestigt ist, während die untere Sitzstrebe (25) an ihrem unteren Teil schwenkbar an den Klauen (10) des unteren Rahmens (1) befestigt ist, und wobei eine Arretierung die inneren Enden der oberen Sitzstrebe (20) und der unteren Sitzstrebe (25) miteinander verbindet, dadurch gekennzeichnet, daß der vordere Rahmen (9) mit dem Kopfrohr (8) einstückig ausgebildet ist, die erst Achse (16) am Sitzrohr (15) befestigt ist, die Sitzstrebe an ihrem mittleren Teil nach oben abknickbar ist und die Arretierung eine Arretierplatte (24) ist, die die inneren Enden der oberen Sitzstrebe (20) und der unteren Sitzstrebe (25) in der Weise miteinander verbindet, daß das innere Ende der unteren Sitzstrebe (25) direkt an der Arretierplatte (24) befestigt ist, während das innere Ende der oberen Sitzstrebe (20) mittels einer in die Arretierplatte (24) eingeführten Verbindungsachse (23) drehbar und gleitbar befestigt ist, wobei eine Druckfeder (26) in der Weise auf die Verbindungsachse (23) einwirkt, daß die obere Sitzstrebe (20) nach außen gespreizt wird, und wobei die Arretierplatte (24) an ihren beiden Seiten mit Klemmteilen (27) versehen ist, die die Verbindungsenden der oberen Sitzstrebe (20) passend halten.

2. Faltbarer Fahrradrahmen nach Anspruch 1, dadurch gekennzeichnet, daß an der Arretierplatte (24) ein Anschlag (28) vorgesehen ist, der ein übermässiges Gleiten eines der Glieder der oberen Sitzstrebe (20) verhindert, wenn die Sitzstrebe mit einer die Kraft der Druckfeder (26) übersteigenden Kraft zusammengedrückt wird.

**Revendications**

1. Cadre de bicyclette pliant, comportant un cadre inférieur (1) pourvu en sa partie intermédiaire d'un palier à potence (3) ayant une partie de crochet (2), un cadre avant (9) ayant un tube de tête (8) étant supporté de manière rotative par un arbre (4) raccordé à l'extrémité avant dudit cadre inférieur (1), ledit cadre inférieur (1) ayant des griffes (10) à l'extrémité arrière supportant un axe (11) de roue arrière, un tube de selle (15) supporté de manière rotative par un arbre (12) raccordé au dit palier de potence (3), un appui (18) avant, supporté de manière rotative entre le premier arbre (16) et un deuxième arbre (17) qui est raccordé au dit cadre avant (9), un appui de selle séparé en un appui de selle supérieur (20) et un appui de selle inférieur (25) de manière à pouvoir plier dans sa partie médiane chacun desdits appuis (20, 25) consistant en une paire d'éléments de manière, ledit appui supérieur de selle (20) étant fixé, de manière à pouvoir pivoter, par son extrémité avant à une partie dudit tube de siège (15) à proximité de l'extrémité supérieure de celui-ci, alors que ledit appui de selle inférieur (25) est fixé, de manière à pouvoir pivoter, par son extrémité inférieure auxdites griffes (10) dudit cadre inférieur (1), le cadre de bicyclette comportant par ailleurs des moyens de verrouillage reliant les extrémités intérieures dudit appui de selle supérieur (20) et dudit appui de siège inférieur (25), caractérisé en ce que ledit cadre avant (9) est intégralement formé par ledit tube de tête (8), ledit premier arbre (16) étant raccordé au dit tube de selle (15), ledit appui de selle étant adapté pour être courbé vers le haut en sa partie médiane, et lesdits moyens de verrouillage étant une plaque de verrouillage (24) qui relie les extrémités intérieures dudit appui de selle supérieur (20) et dudit appui de selle inférieur (25) de manière à ce que l'extrémité intérieure dudit appui de selle inférieur (25) est directement fixée à ladite plaque de verrouillage (24), alors que l'extrémité intérieure dudit appui de selle supérieur (20) est fixée, de manière à pouvoir tourner, et glisser au moyen d'un arbre de raccordement (23) inséré dans ladite plaque de verrouillage (24), un ressort de compression (26) étant prévu qui agit sur ledit arbre de raccordement (23) de manière à étendre ledit appui de siège supérieur (20) vers l'extérieur, ladite plaque de verrouillage (24) étant pourvue des deux côtés de parties de serrage (27) tenant de manière ajustée les extrémités de raccordement dudit appui de selle supérieur (20).

2. Cadre de bicyclette pliant selon la revendication 1, caractérisé en ce qu'un taquet d'arrêt (28) est prévu sur ladite plaque de verrouillage (24) pour éviter un glissement excessif d'un des éléments dudit appui de selle supérieur (20) lorsque ledit appui de selle est pressé par une force supérieure à la force dudit ressort de compression (26).

FIG. 1

FIG. 2

FIG. 3

FIG. 4

**0 116 096**

FIG. 5

FIG . 6

28

27

FIG . 7

28

27

24

27